# FASCICULE DE BREVET EUROPEEN

(11) **EP 2 909 883 B1**
(45) Date de publication et mention de la délivrance du brevet: **20.07.2016**
(21) Numéro de dépôt: 13766545.1
(22) Date de dépôt: 26.09.2013
(51) Int. Cl.: H01M 8/02, H01M 8/24

(54) **PILE A COMBUSTIBLE AMELIOREE**
VERBESSERTE BRENNSTOFFZELLE
IMPROVED FUEL CELL

(30) Priorité: 19.10.2012 FR 1259966
(43) Date de publication de la demande: 26.08.2015
(73) Titulaire: Université de Lorraine, 54052 Nancy Cedex (FR); Centre National de la Recherche Scientifique (CNRS), 75794 Paris Cedex 16 (FR)
(72) Inventeur: MARANZANA, Gaël, F-54000 Nancy (FR); DIDIERJEAN, Sophie, F-54600 Villers Les Nancy (FR); DILLET, Jérôme, F-54000 Nancy (FR); THOMAS, Anthony, 86000 Poitiers (FR); LOTTIN, Olivier, F-54000 Nancy (FR)
(74) Mandataire: Rhein, Alain
(86) Numéro de dépôt international: PCT/EP2013/070043
(87) Numéro de publication internationale: WO 2014/060198

(56) Documents cités:
- FR-A1- 2 956 522
- US-A1- 2004 096 725

## Description

La présente invention concerne une pile à combustible améliorée.

Une pile à combustible conventionnelle consiste en un empilement (stack) de plaques chargées, par l'intermédiaire de canaux, de distribuer les réactifs et de collecter les produits, et par ailleurs d'assurer la connexion électrique. Entre ces plaques sont insérés les Assemblages-Membrane-Electrodes (AME) qui constituent les parties actives de la pile (celles qui produisent le courant électrique en consommant les réactifs).

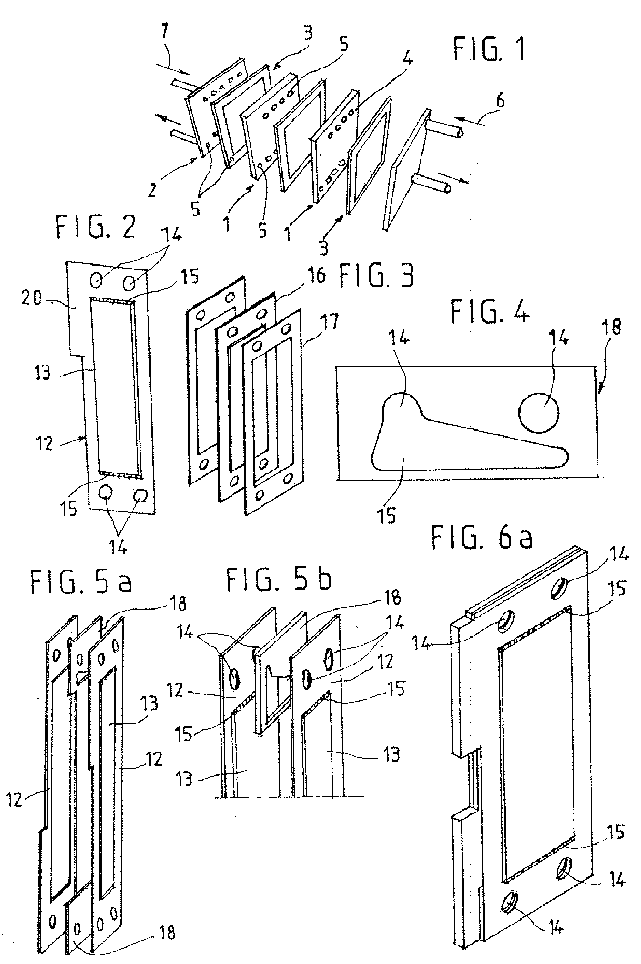

Ces plaques sont souvent appelées plaques bipolaires car elles permettent d'un côté l'alimentation de l'anode d'une cellule en hydrogène, ou un autre carburant gazeux et de l'autre, l'alimentation de la cathode de la cellule adjacente en air, ou un autre comburant gazeux comme de l'oxygène. Le schéma de principe est représenté sur la figure 1. Chaque plaque bipolaire 1 relie d'un point de vue électrique le pôle négatif d'une cellule au pôle positif de la cellule suivante : les cellules sont donc connectées en série et la tension de la pile est égale à la somme des tensions des cellules. Aux extrémités de l'empilement on dispose deux plaques de fin monopolaire 2. Entre les plaques bipolaires sont disposés des AME 3. L'alimentation en gaz est quant à elle généralement réalisée en parallèle : le flux total consommé par la pile se répartit entre les différentes cellules ; des canaux 4 distribuent les gaz sur la surface des AME 3, et des lumières 5 traversent tout l'empilement, pour amener l'hydrogène 6 d'un côté, et l'air 7 de l'autre.

Le rôle des plaques bipolaires 1 est pluriel :
- Assurer la tenue mécanique et, à l'aide de joints disposés entre les plaques, l'étanchéité aux gaz de l'empilement.
- Alimenter en gaz réactif les électrodes (hydrogène à l'anode -pôle négatif-, air à la cathode - pôle positif-). Pour cela, des mini-canaux sont gravés dans les plaques.
- Evacuer les produits de la réaction (eau vapeur et liquide) et les excédants de la réaction.
- Conduire le courant électrique entre les différentes cellules.
- Evacuer la chaleur produite. Pour cela, les plaques bipolaires peuvent être conçues en deux parties entre lesquelles circule de l'air ou un liquide de refroidissement.

Néanmoins cette disposition est assez onéreuse et volumineuse, et le marché des piles à combustibles peine à se développer pour cette raison entre autres. Il existe donc un besoin de trouver des solutions plus simples et plus compactes. En outre les liaisons lumière - canaux, affaiblissent la performance des joints, et induisent des problèmes d'étanchéité au niveau des AME.

Le document WO 02/093668 divulgue une solution assez complexe, visant à améliorer l'étanchéité des joints, en plaçant une pluralité de joints variés à l'arrière de plaques bipolaires. En outre de la complexité de la solution, ce document ne propose aucune solution pour des plaques monopolaires.

Le document WO 03/088398 présente une solution d'empilement différent, dans lequel on trouve des unités avec une plaque monopolaire anode centrale, constituant deux anodes sur ses deux faces, et une plaque monopolaire cathode de part et d'autre. La solution est présentée comme étant moins onéreuse. Néanmoins les arrivées d'hydrogène et d'air sont extérieures à l'empilement et donc assez volumineuses, et l'arrivée d'air est peu contrôlée. En effet chaque unité est séparée de l'unité voisine par un espace, supposé laisser entrer l'air.

La présente invention a pour but de pallier au moins en partie à ces inconvénients. A cet effet elle propose une cellule de pile à combustible comprenant une plaque monopolaire anode configurée pour distribuer un gaz sur une partie active d'une de ses faces, un assemblage membrane électrode (AME) disposé avec une première face sur ladite partie active, une plaque monopolaire cathode, configurée pour distribuer un gaz sur une partie active d'une de ses faces, ladite partie active étant disposée sur la deuxième face dudit assemblage membrane électrode, lesdites plaques monopolaires comportant chacune, en dehors de ladite partie active, une ouïe d'alimentation en gaz. Cette cellule est particulière en ce qu'elle comporte en outre un joint de distribution disposé contre chacune desdites plaques monopolaires, autour de ladite ouïe d'alimentation en gaz, et sur la face opposée à la partie active, en ce que lesdites plaques comportent des orifices, débouchant dans la face opposée à ladite partie active, ledit joint de distribution et lesdits orifices étant configurés pour que ledit gaz soit conduit sur la face opposée à la partie active de ladite ouïe d'alimentation en gaz, vers les orifices, et de là vers la partie active.

Grâce à ces dispositions, l'alimentation en gaz est améliorée, et l'étanchéité des circuits de gaz est améliorée également.

Selon un autre mode de réalisation de l'invention, les plaques monopolaires peuvent comporter chacune deux ouïes d'alimentation en gaz, et ledit joint de distribution est configuré pour que le gaz venant de l'une des deux ouïes soit conduit vers les orifices, et celui venant de l'autre ouïe traverse la plaque monopolaire sans aller vers les orifices.

La présente invention concerne également un ensemble de deux cellules selon l'invention, dans lequel la plaque monopolaire anode de la deuxième cellule est disposée sur le joint de distribution de la plaque monopolaire anode de la première cellule, ledit joint de distribution étant apte à conduire un gaz vers les orifices desdites plaques monopolaires anode des deux cellules, et ledit ensemble comporte un connecteur électrique apte à relier électriquement la plaque monopolaire anode de la deuxième cellule à la plaque monopolaire cathode de la première cellule.

Grâce à ces dispositions, on simplifie considérablement les circuits de gaz, par le fait qu'un seul passage des ouïes d'alimentation vers les orifices permet de conduire ledit gaz vers deux anodes, respectivement deux cathodes. On obtient ainsi une diminution du nombre global de pièces pour deux cellules, une amélioration des étanchéités, ainsi qu'une souplesse d'utilisation par le jeu des connecteurs électriques, qui peuvent être mis en place ou retirés selon les besoins.

Selon d'autres caractéristiques :
- ledit ensemble peut comporter un dispositif de refroidissement inséré entre les plaques monopolaires anode des deux cellules, créant ainsi un gradient de température entre les anodes et les cathodes, ce qui permet une amélioration des performances des cellules,
- ledit dispositif de refroidissement peut être un circuit de fluide, et les plaques monopolaires et les joints de distribution comporter deux ouïes supplémentaires, configurées pour l'alimentation et l'évacuation dudit fluide, permettant ainsi un refroidissement contrôlé par le débit et le refroidissement externe dudit fluide,
- ledit dispositif de refroidissement peut être une ailette de refroidissement, insérée entre deux plaques monopolaires anode et s'étendant vers l'extérieur de l'empilement, de sorte à transmettre les calories, par exemple à l'air ambiant, conférant un refroidissement avec une solution constructive très simple,
- ledit dispositif de refroidissement peut être un caloduc plan, inséré entre deux plaques monopolaires anode et s'étendant vers l'extérieur de l'empilement, de sorte à transmettre les calories, par exemple à l'air ambiant, conférant une autre solution très simple de refroidissement,
- ledit connecteur électrique peut être disposé sur ladite ailette de refroidissement, respectivement ledit caloduc, permettant ainsi d'améliorer les propriétés électriques des cellules,
- ledit ensemble peut comporter une super capacité disposée entre deux plaques monopolaires cathodes et/ou entre deux plaques monopolaires anodes, permettant ainsi un stockage de l'énergie produite, avec une possibilité de mettre à disposition l'énergie ainsi stockée à un moment opportun, et d'une manière très rapide et dynamique.

La présente invention concerne enfin une pile à combustible comportant un ensemble de deux cellules selon l'invention.

L'avantage apporté par la présente invention réside principalement en ce qu'elle rend possible la construction d'une pile à combustible avec une étanchéité aux gaz améliorée ; dans un mode particulier de réalisation de l'invention, elle donne la possibilité de refroidir différemment l'anode et la cathode du fait que deux anodes se font face, et deux cathodes se font face, et d'introduire ainsi un gradient de température entre anode et cathode, favorable pour l'efficacité énergétique de la pile à combustible ; l'invention permet également dans un autre mode particulier de réalisation la mise en place de super capacités, en vue de stocker l'énergie dans la pile.

La présente invention sera mieux comprise à la lecture de la description détaillée qui suit faite en référence aux figures annexées dans lesquelles
- la figure 1 est une vue éclatée de trois cellules d'une pile à combustible selon l'état de la technique,
- la figure 2 est une vue d'une plaque monopolaire d'une cellule de pile à combustible selon l'invention,
- la figure 3 est une vue d'un assemblage membrane électrode (AME) d'une cellule de pile à combustible selon l'invention,
- la figure 4 est une vue schématique d'un joint de distribution d'une cellule de pile à combustible selon l'invention,
- la figure 5 (5a ensemble, 5b détail) est une vue éclatée d'un assemblage de deux plaques monopolaires - soit deux anodes, soit deux cathodes - et de deux joints de distribution, d'une cellule de pile à combustible selon l'invention,
- la figure 6 (6a ensemble, 6b détail) est une vue d'une cellule de pile à combustible selon l'invention, avec deux plaques monopolaires de fin,
- la figure 7 est un ensemble de 7 cellules de pile à combustible selon l'invention et deux plaques monopolaires de fin,
- la figure 8 (8a ensemble, 8b détail) est un ensemble de 9 cellules de pile à combustible selon l'invention, deux plaques monopolaires de fin, et deux plaques de serrage, formant une pile à combustible,
- la figure 9 (9a vue éclatée, 9b vue assemblée) est une vue d'une cellule de pile à combustible selon l'invention avec ailette de refroidissement,
- la figure 10 est une vue d'une pile à combustibles avec ailettes de refroidissement sur les anodes,
- la figure 11 est une vue schématique d'une pile à combustible selon l'invention, avec des super capacités à la fois entre deux anodes successives et entre deux cathodes successives,
- la figure 12 est une vue détaillée éclatée d'un assemblage entre deux plaques monopolaires, un joint de distribution, et une super capacité.

En référence aux dessins des fig. 1 à 12, une cellule 10 d'une pile à combustible selon l'invention comporte cinq pièces, deux plaques monopolaires 12, un AME 16 (avec ou sans joint plat 17), un joint de distribution 18, et un connecteur électrique 19. Ces pièces sont décrites ci-dessous. On peut empiler autant de cellules que nécessaire pour obtenir la tension désirée. Ces cinq pièces (par cellule 10) peuvent être maintenues de façon tout à fait classique par des plaques de serrage 11 situées à l'extrémité de la pile et des tirants internes ou externes (non représentés).

Les deux plaques monopolaires 12 présentent des canaux ou gravures sur une surface active 13, alimentée en gaz et représentée en noir (fig. 2).

La pile à combustible selon l'invention doit, comme toute pile à combustible, être alimentée en un carburant gazeux, par exemple de l'hydrogène, et de l'air ou de l'oxygène. Dans la suite de la description, on considérera le cas de l'hydrogène comme carburant, et de l'air. On utilisera le terme gaz pour décrire l'un quelconque de ces deux gaz, ou des caractéristiques de pièces ou d'assemblages pouvant indifféremment concerner l'un ou l'autre des deux gaz.

Dans l'exemple de la figure 2, la plaque monopolaire 12 est percée de quatre ouïes 14, ouvertures circulaires pour l'arrivée et l'évacuation de l'air (une entrée - une sortie) et de l'hydrogène (une entrée - une sortie). Ces ouïes sont situées à l'extérieur de la surface active (en noir sur la fig. 2) : elles ne l'alimentent donc pas directement. La géométrie des canaux n'étant pas l'objet de cette invention, il n'est pas utile de la décrire, sauf pour mentionner que les gaz parviennent aux canaux (et en sont évacués) par l'intermédiaire des orifices débouchant 15 qui apparaissent sur la fig. 2. L'architecture décrite ici peut s'appliquer à toutes les tailles de plaque d'un 1cm² à plusieurs centaines de cm². A titre d'exemple, on a construit et testé une pile à combustible selon l'invention, qui utilise des plaques monopolaires 12 en inox doré mais il est possible d'utiliser tout type de matériau conducteur électrique compatible avec une utilisation en pile à combustible.

Dans l'exemple de la figure 2, on considère que les plaques monopolaires 12 sont identiques à l'anode et à la cathode. Il est évidemment possible d'utiliser des géométries différentes à l'anode et à la cathode, par exemple au niveau du dessin des canaux (géométrie et taille, non décrites ici), ou de la taille des orifices débouchant 15, pour les adapter au débit des gaz.

La face non active des plaques monopolaires 12 peut être utilisée pour le refroidissement des cellules, si celles-ci sont refroidies. Il est possible de la garder lisse, y compris lorsqu'un circuit de refroidissement interne est utilisé, ou bien d'y graver des canaux permettant de faire circuler un fluide de refroidissement (eau, eau glycolée, huile, air, voire fluide frigorigène à changement de phase) suivant un parcours privilégié.

Si le système de refroidissement inséré entre deux plaques monopolaires est conducteur électrique (c'est le cas par exemple des ailettes métalliques), il peut être nécessaire d'appliquer un revêtement isolant sur la face non active des plaques monopolaires de manière à ce que deux plaques adjacentes restent isolées électriquement.

La troisième pièce de l'empilement est l'assemblage membrane électrode 16.

L'architecture de l'empilement décrite dans cette invention peut s'appliquer à toutes les tailles, et tous types d'assemblages membrane électrode 16. Ces assemblages membrane électrode 16 sont connus de l'état de la technique et ne constituent pas elles-mêmes la présente invention. Dans l'exemple décrit ici, on suppose que l'assemblage membrane-électrodes (voir fig. 3) est muni d'un joint plat 17 à sa périphérie. Ce joint plat 17 vient au contact de la plaque monopolaire 12 pour éviter les fuites de gaz (air ou hydrogène) vers l'extérieur. Dans la suite on considèrera l'assemblage membrane électrode sans préciser si des joints plats y sont adjoints ou non. L'homme du métier sait parfaitement dans quels cas ils doivent être présents.

Le quatrième élément d'une cellule est un joint de distribution 18.

Dans l'exemple de la figure 5, choisi pour illustrer ce document, on utilise deux joints de distribution 18 identiques aux extrémités des plaques monopolaires 12.

Il est possible d'utiliser des géométries de joints de distribution 18 différentes de part et d'autre, ou bien un seul joint de distribution 18 reliant les deux extrémités des plaques et jouant le rôle d'intercalaire.

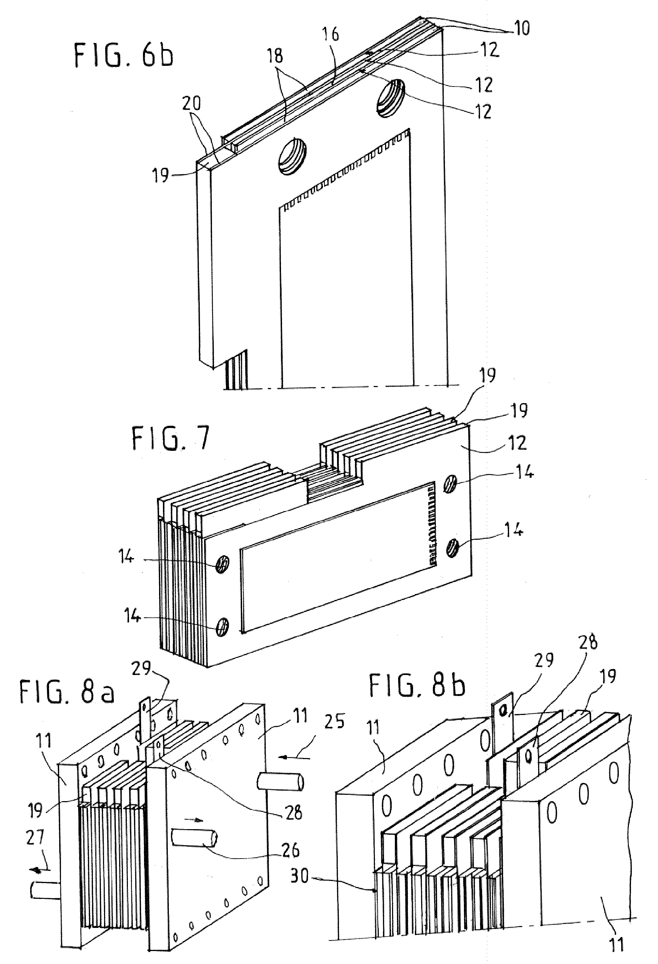

Les joints de distribution 18 possèdent ici plusieurs fonctions :
- Ils distribuent les gaz aux extrémités des plaques monopolaires 12 : plus concrètement, les joints de distribution 18 permettent d'acheminer les gaz entre les ouïes 14 d'alimentation/évacuation des gaz et les orifices débouchant 15 (voir fig. 2). Pour cela, le joint de distribution 18 se place contre les plaques monopolaires 12 du côté opposé à la face active 13 (voir aussi fig. 5 et 6), et présente une ouverture correspondant à une ouïe, où le gaz passera à travers l'ouïe 14 de la plaque sans venir vers l'assemblage membrane électrode 16, et une ouverture englobant la section de l'ouïe 14 et la section des orifices débouchant 15, permettant les passage du gaz de l'ouïe 14 vers les orifices débouchant 15 ou inversement.
- Si l'on utilise un circuit de refroidissement interne à l'empilement, les joints de distribution 18 peuvent également servir à distribuer le fluide de refroidissement (eau, eau glycolée, huile, air, voire fluide frigorigène à changement de phase) entre deux plaques monopolaires 12 adjacentes. Dans ce cas, les plaques monopolaires 12 sont munies d'ouïes 14 supplémentaires permettant la circulation du fluide de refroidissement entre les cellules. Dans ce cas également, on utilisera de préférence un seul joint de distribution 18 reliant les deux extrémités des plaques monopolaires 12.
- Ils assurent l'étanchéité des circuits de gaz, et éventuellement celle du circuit de refroidissement,
- Ils permettent la circulation des gaz entre les cellules, ainsi qu'éventuellement la circulation du fluide de refroidissement.
- Ils assurent l'isolation électrique des deux plaques monopolaires 12 adjacentes (séparées par un joint de distribution 18). Deux plaques monopolaires 12 adjacentes (séparées par un joint de distribution 18) sont alimentées par le même gaz mais ne sont pas au même potentiel.
- Si une seule des deux électrodes est refroidie, les joints de distribution 18 assurent l'isolation thermique (l'absence de contact thermique direct) entre deux plaques monopolaires 12 adjacentes,
- enfin, les joints de distribution 18 peuvent jouer un rôle mécanique en limitant par exemple le rapprochement entre deux plaques adjacentes, par exemple en utilisant un seul joint de distribution 18 reliant les deux extrémités des plaques monopolaires 12 ; ce n'est pas le cas de l'exemple présenté ici.

Le ou les joints de distribution 18 utilisés entre deux plaques monopolaires 12 anodiques ou cathodiques n'ont pas nécessairement la même géométrie. S'ils sont identiques, ils sont disposés de manière symétrique.

Le dernier élément est le connecteur électrique 19 destiné à connecter en série les différentes cellules 10. Ce connecteur électrique 19 peut être très simple, il peut s'agir par exemple d'un simple conducteur métallique intercalé entre une anode et une cathode et maintenu grâce à la pression mécanique exercée par les plaques extérieures de serrage 11 (voir fig. 5 et 6). Sur les figures 5 et 6, le connecteur électrique 19 est inséré entre deux prolongements 20 des plaques monopolaires 12 prévus à cet effet.

Dans l'exemple des figures 5 et 6, le connecteur électrique 19 est une pièce distincte des plaques monopolaires 12, donc amovible, ce qui permet d'obtenir une certaine souplesse dans la configuration électrique de l'empilement (voir plus loin, le paragraphe consacré aux avantages associés à cette architecture).

A partir des pièces décrites ci-dessus, on assemble le stack, ou l'empilement.

La fig. 5 décrit l'assemblage de deux plaques monopolaires 12. Contrairement à un empilement classique, cet assemblage de deux plaques monopolaires 12 est alimenté par un seul gaz (hydrogène ou air). L'espace libre entre les plaques monopolaires 12 peut être utilisé pour insérer un système de refroidissement quelconque (à air, ou à eau par circulation interne ou grâce à des ailettes comme sur l'exemple décrit plus loin), et/ou tout moyen destiné à contrôler l'écartement, si ce rôle n'est pas assuré par les joints de distribution 18.

Une cellule est constituée d'un, joint(s) de distribution 18, d'une plaque monopolaire 12, d'un assemblage membrane électrode 16, d'une plaque monopolaire 12, le joint de distribution 18 de la cellule suivante servant de joint de distribution à la deuxième plaque monopolaire 12, et d'un connecteur électrique 19. L'empilement complet est donc constitué de la répétition de telles cellules.

Dans cet assemblage, les plaques monopolaires 12 ne sont pas en contact électrique ; c'est pour cette raison que l'on doit utiliser une pièce supplémentaire, le connecteur électrique 19, très simple, pour connecter électriquement les différentes cellules 10. Il existe de nombreuses possibilités pour connecter les cellules : montages parallèles/séries, partition d'un stack en plusieurs générateurs, montages bien connus de l'homme du métier.

Les extrémités de l'empilement sont constituées d'une seule plaque monopolaire de fin 30 et d'une plaque de serrage 11 qui est suffisamment rigide pour permettre le serrage (voir figure 8). Une entrée d'air 25 et une sortie d'air 26 sont disposées au droit des ouïes 14 correspondantes, ainsi qu'une entrée d'hydrogène (non visible) et une sortie d'hydrogène 27. Le pôle + 28 et le pôle-29 sont disposés au niveau de ces plaques de serrage 11, et constituent les entrée et sortie de courant de la pile ainsi constituée. Enfin des plaques monopolaires de fin 30 sont disposées adjacentes aux plaques de serrage 11.

Les avantages associés à cette architecture sont en particulier :
- La possibilité de refroidir une seule électrode (l'anode ou la cathode). Il a été montré par ailleurs qu'un gradient de température entre anode et cathode avec une anode plus froide améliorait les performances électriques. Ce point est détaillé dans le paragraphe suivant.
- La possibilité d'insérer un système de refroidissement 21 interne ou externe compact entre les deux plaques monopolaires 12. Ce point est détaillé plus loin.
- La possibilité de déconnecter électriquement une cellule 1. Dans l'état de la technique, les stacks sont stoppés dès qu'une cellule est défaillante (en fin de vie il s'agit généralement d'un trou dans l'AME). Avec la disposition selon l'invention, comme le courant passe à l'extérieur de l'empilement, il est facile d'isoler électriquement la cellule 1 défectueuse en déconnectant son connecteur électrique 19. On peut donc envisager d'augmenter très fortement la durée de vie de la pile.
- D'une manière générale, il existe de nombreuses possibilités pour connecter les cellules 10 entre-elles électriquement. Par exemple, il est possible de partitionner un empilement pour aboutir à plusieurs générateurs de tension inférieure. Ceci est rendu possible par le fait que chaque cellule 10 peut être déconnectée électriquement des autres. Ceci peut éviter l'utilisation d'un convertisseur.
- La simplification de la gestion des gaz et la diminution des problèmes d'étanchéité : les circuits fluides sont simplifiés car un ensemble de deux plaques monopolaires 12 ne distribue qu'un seul gaz.
- La compacité est conservée, voire améliorée.
- La simplicité de la structure, l'utilisation de pièces très simples à fabriquer, et le faible nombre de pièces, permettent de maitriser les coûts de fabrication.

Il est possible d'insérer un système de refroidissement 21 entre deux plaques monopolaires 12.

Un tel système de refroidissement 21 peut être un système interne, sous la forme par exemple d'un circuit de fluide qui échange de la chaleur avec les plaques monopolaires 12 avant d'être dirigé vers un échangeur de chaleur (non représenté) situé à l'extérieur de l'empilement. Dans ce cas, les plaques monopolaires 12 sont munies d'ouïes 14 supplémentaires permettant la circulation du fluide de refroidissement entre les cellules 10 et on utilise de préférence un seul joint de distribution 18 reliant les deux extrémités des plaques. Ce joint de distribution 18 est également percé de manière à permettre la circulation du fluide. Le fluide de refroidissement circule dans l'empilement et dans le circuit extérieur grâce à une pompe ou sous l'effet de la gravité (thermosiphon). Le système de refroidissement interne peut également être constitué en tout ou partie d'un matériau à changement de phase inséré entre les plaques monopolaires 12 et destiné à absorber temporairement la chaleur produite par les cellules 10.

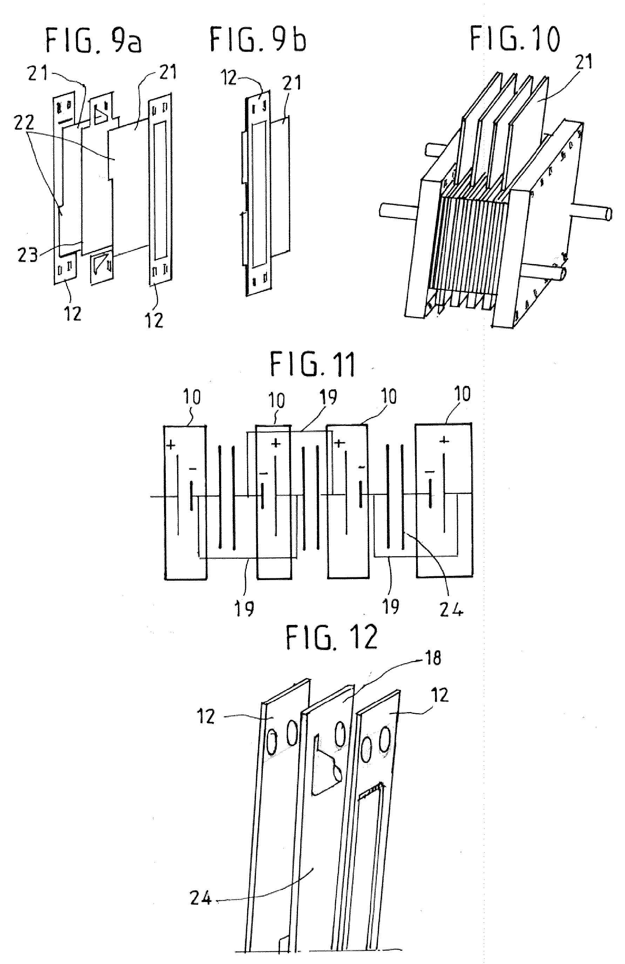

Ce système de refroidissement peut être également un système externe, dans la mesure où la chaleur est dans un premier temps extraite par conduction thermique (ailette de refroidissement) ou changement de phase (caloduc plan) puis transmise à un fluide de refroidissement situé à l'extérieur de l'empilement (typiquement : de l'air). Les ailettes ou les caloducs 21 sont alors insérés entre deux plaques monopolaires 12 adjacentes (voir fig. 9), avec une surface dépassant nettement la surface des plaques monopolaires (voir fig. 9b).

L'ailette ou le caloduc 21 peut alors assurer, comme les joints de distribution 18, plusieurs fonctions :
- Si les plaques monopolaires 12 ne sont pas revêtues d'une couche isolante électrique, il est nécessaire que les ailettes ou les caloducs 21 soient conçus de manière à maintenir l'isolation électrique entre deux plaques monopolaires 12 adjacentes. Pour cela, on utilisera par exemple des ailettes 21 constituées de deux plaques adjacentes séparée d'une feuille isolante 23 (voir figure 9).
- Si les plaques monopolaires 12 sont constituées d'un matériau faiblement conducteur électrique dans les directions du plan, l'ailette ou le caloduc 21 pourra participer à la conduction du courant électrique vers les connecteurs électriques 19. On dispose alors sur l'ailette ou le caloduc 21 un prolongement 22, similaire au prolongement 20 des plaques monopolaires 12, du côté opposé à leur prolongement (voir fig. 9b). C'est le cas par exemple si on utilise des plaques monopolaires 12 en acier inoxydable et des ailettes 21 en aluminium.
- Les ailettes ou les caloducs 21 peuvent, comme les joints de distribution 18, participer à la tenue mécanique de l'empilement en maintenant un écartement constant entre deux plaques monopolaires 12 adjacentes.

Grâce à l'architecture du stack selon l'invention, les électrodes se succèdent dans la direction perpendiculaire aux plaques monopolaires 12 suivant la séquence ...cathode-cathode-anode-anode... Cette particularité permet d'associer un type d'électrode (anode ou cathode) à un assemblage de deux plaques monopolaires 12 puisque ces deux plaques monopolaires 12 sont alimentées par le même gaz. Par conséquent, cela permet également de refroidir différemment les deux électrodes d'une cellule 10 :
- Soit en associant un circuit de refroidissements différent à l'ensemble des cathodes d'une cellule et un deuxième circuit de refroidissement à l'ensemble des anodes, et en faisant circuler un fluide à température différente dans chacun de ces deux circuits.
- Soit en ne refroidissant qu'une seule des deux électrodes.

Ces possibilités n'existent pas avec une architecture de stack où les électrodes des cellules se succèdent suivant la séquence classique ...anode-cathode-anode... , comme ceux de l'état de la technique.

Nous avons pu montrer par un essai sur une cellule unitaire que les performances de la pile, et la gestion de l'eau dans la cellule, pouvaient dépendre assez largement du gradient de température entre les deux électrodes. Par conséquent, pouvoir agir de manière indépendante sur le refroidissement des deux électrodes permet d'optimiser la gestion de l'eau dans la cellule (l'eau va avoir tendance à aller vers le côté le plus froid) et ses performances (en limitant les risques de noyage, c'est-à-dire les risques d'obstruction des canaux ou des milieux poreux par de l'eau liquide).

Pour illustrer cette possibilité, la figure 10 montre un assemblage tel que celui de la figure 8 où l'on utilise des ailettes de refroidissement 21 une fois sur deux : un assemblage de deux plaques monopolaires 12 sur deux n'est donc pas refroidi. Sauf dans le cas particulier où l'on cherche à connecter électriquement deux cellules 10 en parallèle, ces ailettes de refroidissement 21 doivent être isolantes électriquement, par exemple par le moyen d'une feuille isolante 23, de manière à ce que les deux plaques monopolaires 12 puissent être à des potentiels différents.

Comme visible à la fig. 12, il est possible également d'insérer une super capacité 24 plane, encore appelé super condensateur. Les deux plaques monopolaires 12 ne sont pas au même potentiel électrique : il existe une différence de potentiel entre deux plaques monopolaires 12 adjacentes (anode - anode ou cathode - cathode) égale au potentiel de chaque cellule 10 de la pile à combustible. Il est donc possible de profiter de cette différence de potentiel pour charger la super capacité 24 insérée entre les deux plaques monopolaires 12 adjacente. Cela correspond à une architecture hybride « pile à combustible - super capacité » dans laquelle les deux éléments fonctionnent en tandem : lorsque le potentiel des cellules 10 de la pile à combustible est supérieur à celui existant aux bornes des super capacités 24, les super capacités se chargent en consommant une partie du courant produit par la pile. Lorsque le potentiel des cellules de la pile devient inférieur à celui des super capacités, celle-ci peuvent fournir un courant vers l'extérieur du système. Un tel objet présente l'avantage de pouvoir stocker de l'énergie rapidement disponible dans les super capacités 24, ce qui permet d'améliorer :
- la puissance transitoire maximale de la pile,
- sa dynamique (son temps de réponse face à une sollicitation électrique),
- sa durabilité.

D'un point de vue électrique, le schéma équivalent obtenu est représenté à la fig. 11. Les pôles + et - des cellules de pile à combustible se font bien face. Placer une super capacité 24 entre deux plaques monopolaires 12 revient donc d'un point de vue électrique à placer une super capacité 24 en parallèle de chaque cellule 10 de pile à combustible.

Bien que l'invention ait été décrite selon un mode de réalisation particulier, elle n'y est nullement limitée, et des variantes peuvent y être apportées, ainsi que des combinaisons des variantes décrites, sans pour autant sortir du cadre de la présente invention.

## Revendications

1. Cellule (10) de pile à combustible comprenant une plaque monopolaire (12) anode configurée pour distribuer un gaz sur une partie active (13) d'une de ses faces, un assemblage membrane électrode (16) disposé avec une première face sur ladite partie active (13), une plaque monopolaire (12) cathode, configurée pour distribuer un gaz sur une partie active (13) d'une de ses faces, ladite partie active étant disposée sur la deuxième face dudit assemblage membrane électrode (16), lesdites plaques monopolaires (12) comportant chacune, en dehors de ladite partie active (13), une ouïe (14) d'alimentation en gaz, **caractérisée en ce qu'**elle comporte en outre un joint de distribution (18) disposé contre chacune desdites plaques monopolaires (12), autour de ladite ouïe (14) d'alimentation en gaz, et sur la face opposée à la partie active (13), **en ce que** lesdites plaques monopolaires (12) comportent des orifices (15), débouchant dans la face opposée à ladite partie active (13), ledit joint de distribution (18) et lesdits orifices (15) étant configurés pour que ledit gaz soit conduit sur la face opposée à la partie active (13) de ladite ouïe (14) d'alimentation en gaz, vers les orifices (15), et de là vers la partie active (13).

2. Cellule (10) selon la revendication précédente, dans laquelle les plaques monopolaires (12) comportent chacune deux ouïes (14) d'alimentation en gaz, et ledit joint de distribution (18) est configuré pour que le gaz venant de l'une des deux ouïes soit conduit vers les orifices (15), et celui venant de l'autre ouïe traverse la plaque monopolaire (12) sans aller vers les orifices (15).

3. Ensemble de deux cellules (10) selon l'une des revendications précédentes, dans lequel la plaque monopolaire (12) anode de la deuxième cellule (10) est disposée sur le joint de distribution (18) de la plaque monopolaire (12) anode de la première cellule (10), ledit joint de distribution (18) étant apte à conduire ledit gaz vers les orifices (15) des plaques monopolaires (12) anode des deux cellules (10), et ledit ensemble comporte un connecteur électrique (19) apte à relier électriquement la plaque monopolaire (12) anode de la deuxième cellule (10) à la plaque monopolaire (12) cathode de la première cellule (10).

4. Ensemble selon la revendication précédente, comportant un dispositif de refroidissement (21) inséré entre les plaques monopolaires (12) anode des deux cellules (10).

5. Ensemble selon la revendication précédente, dans lequel ledit dispositif de refroidissement (21) est un circuit de fluide, et les plaques monopolaires (12) et les joints de distribution (18) comportent deux ouïes (14) supplémentaires, configurées pour l'alimentation et l'évacuation dudit fluide.

6. Ensemble selon la revendication 4, dans lequel ledit dispositif de refroidissement est une ailette de refroidissement (21), insérée entre deux plaques monopolaires (12) anode et s'étendant vers l'extérieur de l'empilement, de sorte à transmettre les calories, par exemple à l'air ambiant.

7. Ensemble selon la revendication 4, dans lequel ledit dispositif de refroidissement est un caloduc plan (21), inséré entre deux plaques monopolaires (12) anode et s'étendant vers l'extérieur de l'empilement, de sorte à transmettre les calories, par exemple à l'air ambiant.

8. Ensemble selon l'une des revendications 6 ou 7, dans lequel ledit connecteur électrique (19) est disposé sur ladite ailette de refroidissement (21), respectivement ledit caloduc (21).

9. Ensemble selon l'une des revendications 3 à 8, comportant une super capacité (24) disposée entre deux plaques monopolaires (12) cathodes et/ou entre deux plaques monopolaires (12) anodes.

10. Pile à combustible comprenant un ensemble selon l'une des revendications 3 à 9.

## Patentansprüche

1. Zelle (10) für eine Brennstoffzelle, umfassend eine monopolare Anodeplatte (12), die konfiguriert ist, um ein Gas auf einem aktiven Teil (13) einer seiner Seiten zu verteilen, eine Membran-Elektrode-Anordnung (16), die mit einer ersten Fläche auf dem besagten aktiven Teil (13) angeordnet ist, eine monopolare Kathodeplatte (12), die konfiguriert ist, um ein Gas auf einem aktiven Teil (13) einer seiner Seiten zu verteilen, wobei der besagte aktive Teil auf der zweiten Fläche der besagten Membran-Elektrode-Anordnung (16) angeordnet ist, wobei die besagten monopolaren Platten (12) jeweils, außer dem besagten aktiven Teil (13), eine Gaszufuhröffnung (14) umfassen, **dadurch gekennzeichnet, dass** sie außerdem eine Verteilungsdichtung (18) umfasst, die an jede der besagten monopolaren Platten (12) um die Gaszufuhröffnung (14) herum und auf der dem aktiven Teil (13) gegenüberliegenden Fläche angeordnet ist, dass die besagten monopolaren Platten (12) Öffnungen (15) umfassen, die in der dem besagten aktiven Teil (13) gegenüberliegenden Fläche ausmünden, wobei die besagte Verteilungsdichtung (18) und die besagten Öffnungen (15) so konfiguriert sind, dass das besagte Gas auf die dem aktiven Teil (13) der besagten Gaszufuhröffnung (14) gegenüberliegende Seite zu den Öffnungen (15) und von dort zu dem aktiven Teil (13) geführt wird.

2. Zelle (10) nach dem vorhergehenden Anspruch, bei der die monopolaren Platten (12) jeweils zwei Gaszufuhröffnungen (14) umfassen und die Verteilungsdichtung (18) so konfiguriert ist, dass das aus der einen der beiden Öffnungen kommende Gas zu den Öffnungen (15) geführt wird und dasjenige, das aus der anderen Öffnung kommt, durch die monopolare Platte (12) hindurch fliesst, ohne zu den Öffnungen (15) zu gehen.

3. Gesamtheit von zwei Zellen (10) nach einem der vorhergehenden Ansprüche, bei der die monopolare Anodeplatte (12) der zweiten Zelle (10) auf der Verteilungsdichtung (18) der monopolaren Anodeplatte (12) der ersten Zelle (10) angeordnet ist, wobei die besagte Verteilungsdichtung (18) geeignet ist, das besagte Gas zu den Öffnungen (15) der monopolaren Anodeplatten (12) der beiden Zellen (10) zu führen, und wobei die besagte Gesamtheit einen elektrischen Verbinder (19) umfasst, der geeignet ist, die monopolare Anodeplatte (12) der zweiten Zelle (10) elektrisch mit der monopolaren Kathodeplatte (12) der ersten Zelle (10) zu verbinden.

4. Gesamtheit nach dem vorhergehenden Anspruch, umfassend eine zwischen den monopolaren Anodeplatten (12) der beiden Zellen (10) eingefügte Kühlvorrichtung (21).

5. Gesamtheit nach dem vorhergehenden Anspruch, bei der die besagte Kühlvorrichtung (21) ein Fluidkreislauf ist und die monopolaren Platten (12) und die Verteilungsdichtungen (18) zwei zusätzliche Öffnungen (14) umfassen, die für die Zufuhr und Abfuhr des besagten Fluids konfiguriert sind.

6. Gesamtheit nach Anspruch 4, bei der die besagte Kühlvorrichtung eine Kühlrippe (21) ist, die zwischen zwei monopolaren Anodeplatten (12) eingefügt ist und sich zur Außenseite des Stapels erstreckt, so dass die Kalorien zum Beispiel an die Umgebungsluft weitergeleitet werden.

7. Gesamtheit nach Anspruch 4, bei der die besagte Kühlvorrichtung ein flaches Wärmerohr (21) ist, das zwischen zwei monopolaren Anodeplatten (12) eingefügt ist und sich zur Außenseite des Stapels erstreckt, so dass die Kalorien zum Beispiel an die Umgebungsluft weitergeleitet werden.

8. Gesamtheit nach einem der Ansprüche 6 oder 7, bei der der besagte elektrische Verbinder (19) auf der besagten Kühlrippe (21) bzw. auf dem besagten Wärmerohr (21) angeordnet ist.

9. Gesamtheit nach einem der Ansprüche 3 bis 8, umfassend eine Superkapazität (24), die zwischen zwei monopolaren Kathodenplatten (12) und/oder zwischen zwei monopolaren Anodeplatten (12) angeordnet ist.

10. Brennstoffzelle, umfassend eine Gesamtheit nach einem der Ansprüche 3 bis 9.

## Claims

1. Cell (10) for a fuel cell comprising an anode monopolar plate (12) configured to distribute a gas on an active portion (13) of one of its faces, a membrane-electrode assembly (16) arranged with a first face on said active portion (13), a cathode monopolar plate (12) configured to distribute a gas on an active portion (13) of one of its faces, said active portion being arranged on the second face of said membrane-electrode assembly (16), said monopolar plates (12) each including, besides said active portion (13), a gas supply opening (14), wherein it comprises in addition a distribution seal (18) arranged against each of said monopolar plates (12), around said gas supply opening (14) and on the face opposite the active portion (13), wherein said monopolar plates (12) include orifices (15) ending into the face opposite said active portion (13), said distribution seal (18) and said orifices (15) being configured for said gas to be led onto the side opposite the active portion (13) of said gas supply opening (14), towards the orifices (15), and from there towards the active portion (13).

2. Cell (10) according to the preceding claim, wherein the monopolar plates (12) each include two gas supply openings (14), and said distribution seal (18) is configured for the gas proceeding from one of the two openings to be led to the orifices (15), and that proceeding from the other opening to pass through the monopolar plate (12) without going to the orifices (15).

3. Assembly of two cells (10) according to one of the preceding claims, wherein the anode monopolar plate (12) of the second cell (10) is arranged on the distribution seal (18) of the anode monopolar plate (12) of the first cell (10), said distribution seal (18) being capable of leading said gas to the orifices (15) of the anode monopolar plates (12) of the two cells (10), and said assembly includes an electrical connector (19) capable of electrically connecting the anode monopolar plate (12) of the second cell (10) to the cathode monopolar plate (12) of the first cell (10).

4. Assembly according to the preceding claim, including a cooling device (21) inserted between the monopolar plates (12) of the two anode cells (10).

5. Assembly according to the preceding claim, wherein said cooling device (21) is a fluid circuit, and the monopolar plates (12) and the distribution seals (18) include two additional openings (14) configured for the supply and the discharge of said fluid.

6. Assembly according to claim 4, wherein said cooling device is a cooling fin (21) inserted between two anode monopolar plates (12) and extending towards the outer side of the pile, so as to transmit the calories for example to the ambient air.

7. Assembly according to claim 4, wherein said cooling device is a flat heat pipe (21) inserted between two anode monopolar plates (12) and extending towards the outer side of the pile, so as to transmit the calories for example to the ambient air.

8. Assembly according to one of claims 6 or 7, wherein said electrical connector (19) is arranged on said cooling fin (21) or said heat pipe (21), respectively.

9. Assembly according to one of claims 3 to 8, including a super capacitor (24) arranged between two cathode monopolar plates (12) and/or between two anode monopolar plates (12).

10. Fuel cell comprising an assembly according to one of claims 3 to 9.
